# EUROPEAN PATENT APPLICATION

(11) **EP 4 730 073 A1**
(43) Date of publication of application: **22.04.2026**
(21) Application number: 25207800.1
(22) Date of filing: 09.10.2025
(51) Int. Cl.: G06F 1/16, B60R 11/02

(54) **METHOD AND SYSTEM FOR CHARGING AND MOUNTING A MOBILE ELECTRONIC DEVICE**

(30) Priority: 18.10.2024 US 202418919864; 16.04.2025 US 202519180428
(71) Applicant: Havis, Inc., Warminster, PA 18974 (US)
(72) Inventor: YANG, Shay, Warminster, PA 18974 (US)
(74) Representative: SSM Sandmair

(57) **Abstract**

A system for mounting a mobile electronic device (MED) having a charging port includes a case to receive the **MED** and a docking surface to receive the case. The case has a front surface facing the **MED** and a mounting surface. One or more stationary alignment tabs project from the docking surface and face the mounting surface when the case is received by the docking surface. A key projects from the docking surface and has at least one pair of mating sections movable relative to each other between expanded and compressed positions during mounting. The tabs facilitate alignment of and engagement between the charging port of the **MED** and a charging connector during mounting. The tabs and the key are structured such that when the mounting surface of the case engages with the key and the tabs, only sliding movement of the case relative to the dock is permitted.

## Description

### CROSS-REFERENCE TO RELATED APPLICATION

This is a continuation-in-part application of pending U.S. Patent Application Serial No. 18/919,864, titled "METHOD AND SYSTEM FOR CHARGING AND MOUNTING A MOBILE ELECTRONIC DEVICE," filed on October 18, 2024, the entire content of which is incorporated herein by reference for all purposes.

### TECHNICAL FIELD

The present invention relates generally to mounting methods and systems, and more particularly, to methods and systems for charging and mounting a mobile electronic device.

### BACKGROUND OF THE INVENTION

It is desired to mount mobile electronic devices (e.g. tablet computers, smart phones, portable devices, etc.) to a dock or surface in order to facilitate hands-free interaction with or use of the mobile electronic devices. For example, in a moving vehicle, it may be desirable to use or interact with the mobile electronic device(s) without requiring that the user to hold the device. Additionally, it may be desirable to charge the mobile electronic device(s) while in use or mounted to a dock. Thus, there is a need for methods and systems for charging and mounting a mobile electronic device that allows for convenient access, use, and charging of the mobile electronic device.

### SUMMARY OF THE INVENTION

Aspects of the present invention are directed to methods and systems for charging and mounting a mobile electronic device.

In one exemplary aspect, there is provided a system for mounting a mobile electronic device having a charging port. The system includes a case configured to receive the mobile electronic device and a dock having a docking surface configured to receive the case. The case has a front surface configured to face the mobile electronic device, a rear surface opposite the front surface and including a mounting surface, and one or more peripheral side surfaces surrounding the front surface. The docking surface includes one or more stationary alignment tabs projecting from the docking surface and a key projecting from the docking surface. The one or more stationary alignment tabs face the mounting surface of the case when the case is received by the docking surface. The tabs are configured to facilitate alignment of and engagement between the charging port of the mobile electronic device and a charging connector during mounting. The key has at least one pair of mating sections movable relative to each other between an expanded position and a compressed position during mounting. The one or more alignment tabs and the key are structured such that, when the mounting surface of the case engages with the key and the one or more alignment tabs, only sliding movement of the case relative to the dock is permitted.

In some exemplary aspects, the mounting surface includes one or more grooves configured to mate with corresponding protrusions of the mating sections to align the case with the dock during mounting.

In some exemplary aspects, the mounting surface includes one or more projections configured to mate with the corresponding one or more stationary alignment tabs to align the charging connector with the charging port during mounting and to secure the case to the dock during charging.

In some exemplary aspects, the mounting surface includes at least one stop surface positioned to prevent movement of the at least one pair of mating sections toward the compressed position when the one or more projections of the mounting surface are mated to the one or more stationary alignment tabs, thereby preventing disconnection of the case from the dock during charging.

In some exemplary aspects, the stop surface extends for a length between the at least one pair of mating sections.

In some exemplary aspects, the key includes one or more biasing elements, the one or more biasing elements biasing the at least one pair of mating sections away from each other in the expanded position.

In some exemplary aspects, the at least one pair of mating sections move toward the compressed position when the one or more grooves are mated to the corresponding protrusions of the mating sections during mounting.

In some exemplary aspects, the at least one pair of mating sections moves toward the expanded position when the one or more projections are mated to the one or more stationary alignment tab, thereby preventing disconnection of the case from the dock during charging.

In some exemplary aspects, the at least one pair of mating sections remain in the expanded position as the one or more grooves are mated to the corresponding protrusions of the mating sections during mounting.

In some exemplary aspects, at least one of the one or more peripheral side surfaces includes an opening to enable access by the charge connector to the charging port of the mobile electronic device.

In some exemplary aspects, the dock includes a base fixedly coupled to the docking surface, the base comprising a first surface facing the one or more peripheral sides surfaces including the opening, the first surface defining an aperture through which the charge connector extends.

In another exemplary aspect, there is provided a method for charging a mobile electronic device via a wired connection with a charge connector. The method includes steps of mounting the case to the dock and charging the mobile electronic device. The dock has a docking surface configured to receive the case and the docking surface includes one or more stationary alignment tabs projecting from the docking surface and a key projecting from the docking surface. The one or more stationary alignment tabs face the mounting surface of the case when the case is received by the docking surface. The tabs are configured to facilitate alignment of and engagement between the charging port of the mobile electronic device and a charging connector during mounting. The key has at least one pair of mating sections movable relative to each other between an expanded position and a compressed position during mounting. The one or more alignment tabs and the key are structured such that, when the mounting surface of the case engages with the key and the one or more alignment tabs, only sliding movement of the case relative to the dock is permitted.

In some exemplary aspects, the key includes one or more biasing elements, the one or more biasing elements biasing the at least one pair of mating sections away from each other in the expanded position.

In some exemplary aspects, the step of mounting the case to the dock further comprises applying a force to the key when the mounting surface of the case faces the docking surface of the dock, such that one or more grooves of the mounting surface mate with corresponding protrusions of the mating sections.

In some exemplary aspects, the at least one pair of mating sections moves from the expanded position to the compressed position in response to application of the force to the key.

In some exemplary aspects, the step of mounting the case to the dock further comprises sliding the case downwardly when the mounting surface of the case faces the docking surface of the dock, until one or more projections of the mounting surface mate with the corresponding one or more stationary alignment tabs.

In some exemplary aspects, the step of mounting the case to the dock further comprises engaging one or more projections of the mounting surface with the corresponding one or more stationary alignment tabs, and wherein the at least one pair of mating sections move from the compressed position to the expanded position in response to engagement between one or more projections and the corresponding one or more stationary alignment tabs.

In some exemplary aspects, the step of mounting the case to the dock further comprises sliding the case downwardly when the mounting surface of the case faces the docking surface of the dock, such that the one or more grooves are mated to the corresponding protrusions of the mating sections during mounting, but the at least one pair of mating sections are maintained in the expanded position during mounting.

In some exemplary aspects, the step of mounting the case to the dock further comprises sliding the case further downwardly after the mounting surface of the case engages with the key to align one or more projections of the mounting surface with the corresponding one or more stationary alignment tabs.

In some exemplary aspects, the mounting surface includes at least one stop surface positioned to prevent movement of the at least one pair of mating sections toward the compressed position when the one or more projections of the mounting surface are mated to the one or more stationary alignment tabs, thereby preventing disconnection of the case from the dock during charging.

In another exemplary aspect, there is provided a system for mounting a mobile electronic device having a charging port. The system includes a case configured to receive the mobile electronic device. The case has a front surface configured to face the mobile electronic device, a rear surface opposite the front surface, and one or more peripheral side surfaces surrounding the front surface. The rear surface includes a mounting surface having a metal layer. The system includes a dock having a docking surface configured to receive the case. The docking surface has one or more magnets generating a magnetic field in a direction of the mounting surface of the case when the case is received by the docking surface. The docking surface also has one or more stationary alignment tabs projecting from the docking surface and facing the mounting surface of the case when the case is received by the docking surface, the one or more stationary alignment tabs configured to facilitate alignment of and engagement between the charging port of the mobile electronic device and a charging connector during mounting. The one or more alignment tabs are structured such that, when the mounting surface of the case engages with the one or more alignment tabs, only sliding movement of the case relative to the dock is permitted. The one or more magnets are configured to align with the metal layer when the charging port of the mobile electronic device is engaged with the charging connector during mounting to resist the sliding movement of the case relative to the dock.

In some exemplary aspects, the system has a magnetic insert capable of attachment to the charging port of the mobile electronic device. Additionally or optionally, at least one of the one or more peripheral side surfaces includes an opening to enable access by the charge connector to the charging port of the mobile electronic device. In some exemplary aspects, the magnetic insert is integrally formed with the one or more peripheral side surfaces of case. In other exemplary aspects, the magnetic insert is includes an outer surface that is configured to be flush with the one or more peripheral side surfaces of the case when the magnetic insert is attached to the charging port of the mobile electronic device.

In some exemplary aspects, the dock includes a base fixedly coupled to the docking surface, the base having a first magnetic surface facing the one or more peripheral side surfaces including the opening, the first magnetic surface defining an aperture through which the charge connector extends. Additionally or optionally, the first magnetic surface of the dock is configured to engage the magnetic insert of the case to align the case with the dock during mounting or to secure the case to the dock during charging.

In some exemplary aspects, the one or more magnets of the docking surface is positioned to engage the metal layer of the case, thereby preventing disconnection of the case from the dock during charging.

In another exemplary aspect, there is provided a method for charging a mobile electronic device via a wired connection with a charge connector. The method includes a step of housing a mobile device having a charging port in a case configured to receive the mobile electronic device. The case has a front surface configured to face the mobile electronic device, a rear surface opposite the front surface, and one or more peripheral side surfaces surrounding the front surface. The rear surface includes a mounting surface having a metal layer. The method includes a step of mounting the case to a dock. The dock has a docking surface configured to receive the case. The docking surface has one or more magnets generating a magnetic field in a direction of the mounting surface of the case when the case is received by the docking surface. The docking surface also has one or more stationary alignment tabs projecting from the docking surface and facing the mounting surface of the case when the case is received by the docking surface, the tabs configured to facilitate alignment of and engagement between the charging port of the mobile electronic device and a charging connector during mounting. The mounting includes aligning the one or more magnets with the metal layer to resist the sliding movement of the case relative to the dock. The method includes a step of charging the mobile electronic device.

In some exemplary aspects, a base fixedly coupled to the docking surface, the base comprising a first magnetic surface facing the one or more peripheral side surfaces including the opening, the first magnetic surface defining an aperture through which the charge connector extends.

In some exemplary aspects, the method also includes positioning a magnetic insert adjacent to the dock, such that the magnetic insert is drawn by an attractive force for engagement with the first magnetic surface of the dock to align the case with the dock during mounting or to secure the case to the dock during charging.

In some exemplary aspects, the method also includes positioning the metal layer of the case adjacent to the one or more magnets of the docking surface, such that the metal layer is drawn by an attractive force for engagement with the one or more magnets of the docking surface, thereby preventing disconnection of the case from the dock during charging.

In some exemplary aspects, the method also includes unmounting the case from the dock by applying a force to one or more of the case and the dock to overcome the resistance generating by aligning the one or more magnets with the metal layer.

### BRIEF DESCRIPTION OF THE DRAWINGS

The invention is best understood from the following detailed description when read in connection with the accompanying drawings, with like elements having the same reference numerals. When a plurality of similar elements are present, a single reference numeral may be assigned to the plurality of similar elements with a small letter designation referring to specific elements. When referring to the elements collectively or to a non-specific one or more of the elements, the small letter designation may be omitted. In addition, according to common practice, the various features of the drawings are not drawn to scale unless otherwise indicated, and the dimensions of the various features may be expanded or reduced for clarity. Included in the drawings are the following figures:
FIGS. 1A and 1B depict an exemplary embodiment of a system for mounting a mobile electronic device having a charging port in accordance with aspects of the invention;
FIG. 2 is a rear view of an exemplary embodiment of a case in accordance with aspects of the invention;
FIG. 3 is a perspective view of an exemplary embodiment of a dock in accordance with aspects of the invention;
FIGS. 4A-4B depict an exemplary embodiment of a base in accordance with aspects of the invention;
FIG. 5A depicts a bottom view of the case of FIG. 2 in accordance with aspects of the invention;
FIG. 5B depicts a top view of the dock of FIG. 3 in accordance with aspects of the invention;
FIG. 6 depicts an exemplary embodiment of at least one stop surface in accordance with aspects of the invention;
FIGS. 7A-7B depict front perspective views of an exemplary embodiment of a key in accordance with aspects of the invention; and
FIG. 8 depicts an exemplary method for charging a mobile electronic device via a wired connection with a charge connector in accordance with aspects of the invention;
FIGS. 9A-9D depict another exemplary embodiment of a system for mounting a mobile electronic device having a charging port in accordance with aspects of the invention;
FIG. 10 depicts an exemplary embodiment of a case in accordance with aspects of the invention; and
FIG. 11 is a perspective view of an exemplary embodiment of a dock in accordance with aspects of the invention.

### DETAILED DESCRIPTION OF THE INVENTION

The methods and systems disclosed herein relate to mounting a mobile electronic device. The disclosed methods and systems are described herein in the context of mounting the mobile electronic device and charging said mobile electronic device, but it will be understood that aspects of the present invention are also usable in any application in which wired communication (e.g., to facilitate exchange of data, etc.) between the mobile device and an external device. Thus, references to charging ports, devices, etc. in the specification and claims should be understood as encompassing data communication ports, devices, etc. as well. The disclosed methods and systems are described herein with respect to mounting mobile electronic devices, such as tablet computers, smart phones, portable devices, radios, or the like, but it will be understood that certain aspects of the present invention are usable in any application in which a mount is desired. Any object may be mounted to the disclosed exemplary embodiments, but the disclosed methods and systems are particularly suitable for mounting mobile electronic devices having a charging port or mobile electronic devices configured to be charged via a wired connection with a charge connector. The methods and systems disclosed herein may be configured to hold mobile electronic devices in a fixed position, or to allow the device to move (e.g., rotate, pivot, etc.) between various positions (e.g., use and stowed positions, driver-side and passenger-side use positions, movement to accommodate user preferences, etc.), while the mobile electronic devices are configured to be charged via a wired connection.

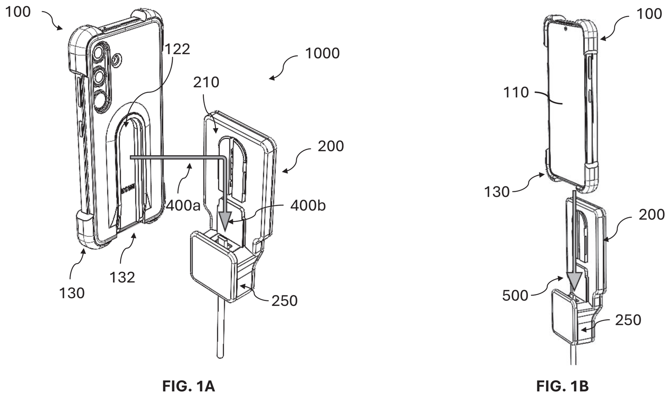

With reference to the drawings, FIGS. 1A-1B illustrates an exemplary system 1000 for mounting a mobile electronic device having a charging port. In an exemplary embodiment, system 1000 includes a case 100 configured to receive the mobile electronic device 110. In general, the system 1000 may be provided anywhere that it is desired to dock and/or charge mobile electronic device 110.

In an exemplary embodiment, case 100 has a front surface configured to face the mobile electronic device 110, a rear surface 120 opposite the front surface, and one or more peripheral side surfaces 130 surrounding the front surface. Further, at least one of the one or more peripheral side surfaces 130 of case 100 include an opening 132 to enable access by at least a charge connector 300 to the charging port of the mobile electronic device 110 when the mobile electronic device 110 is received by the case 100. In some examples, mobile electronic device 110 may include a conventional charging port, e.g. a Universal Serial Bus Type C (USB-C) charging port. In other examples, mobile electronic device may be provided with an additional removable charging interface to simplify or promote connection with charge connector 300.

Case 100 has sufficient rigidity and strength to securely hold one or more different types of mobile electronic devices, such as a mobile phone and other like devices, without substantial movement during normal operation of the mobile electronic device 110, particularly when the mobile electronic device 110 is charging. Case 100 may comprise a single unitary part, or it may be an assembly of structural elements comprising multiple individual unitary parts or layers of material. Still further, case 100 may have any suitable size and shape. Preferably, case 100 is configured to have a size and shape that generally corresponds to the size and shape of the mobile electronic device 110 to be received. Additionally or optionally, case 100 comprises a generally planar surface that is configured to substantially cover, contact, and/or face at least one surface of the mobile electronic device 110.

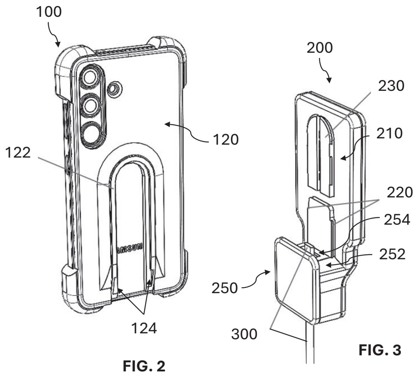

Turning now to FIGS. 1A-1B, 2, 3, and 4A-4B, the rear surface 120 of the case 110 includes a mounting surface 122. In an exemplary embodiment, system 1000 includes a dock 200 having a docking surface 210 configured to receive the case 100. The dock 200 may comprise a single unitary part, or it may be an assembly of structural elements comprising multiple individual unitary parts. For example, the dock 200 may be an assembly of parts including a base 250 fixedly coupled to the docking surface 210. The base 250 and the docking surface 210 may be integrally formed, or may be connected to each other using any suitable fasteners or combinations of fastening means, such as screws, nuts and bolts, rivets, welding, adhesives, and so on. The various parts of the dock 200 may be formed using any suitable materials. Still further, the dock 200 may have any suitable size and shape. Preferably, dock 200 is configured to have a size and shape that generally corresponds to the size and shape of the case 100 and/or the mobile electronic device 110 to be received.

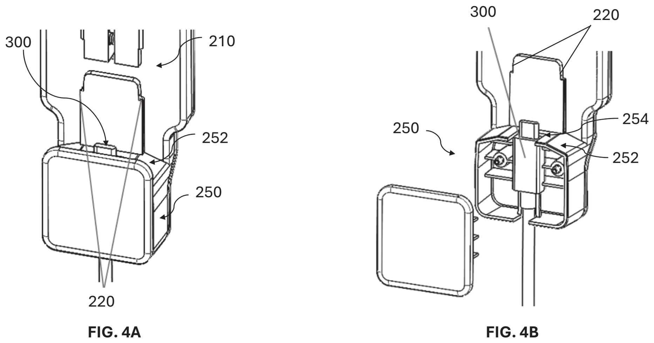

In an exemplary embodiment, base 250 has a first surface 252 (as best shown in FIG. 4A, for example) facing the one or more peripheral sides surfaces 130 including the opening 132. The base 250, including the first surface 252, may have any suitable size and shape that generally corresponds to the size and shape of the case 100 to be received by the dock 200 and/or the mobile electronic device 110 to be received by the case 100. The first surface 252 defines an aperture 254 through which the charge connector 300 extends. In this way, the mobile electronic device 110 is advantageously charged via a wired connection with the charge connector 300, when the mobile electronic device 110 is received by the case 100 and when the case 100 (with the mobile electronic device 110) is mounted to the dock 200. This is achieved, in part, by internal structures defined by base 250 (e.g. as best shown in FIG. 4B), which together with the aperture 254 through which charge connector 300 extends, the mobile electronic device 110 is prevented or restricted from being disconnected from the charge connector 300 (and thus avoids disruptions to charging the mobile electronic device 110 via the wired connection with the charge connector 300, such as disruptions caused by/in a moving vehicle)

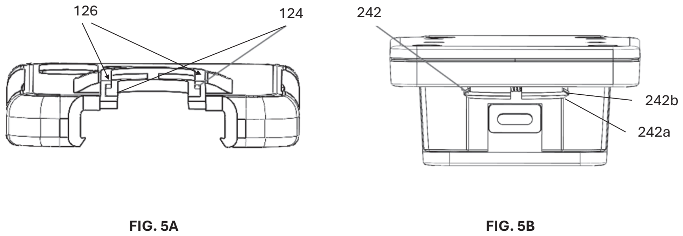

To achieve this advantage, as best illustrated in FIGS. 4A and 5A-5B, the docking surface 210 has one or more stationary alignment tabs 220 projecting from the docking surface 210. In general, the one or more stationary alignment tabs 220 have a size and shape that corresponds to the size and shape of a portion or surface of the case 100 and/or the mobile device 110, such as one or more projections 126 of mounting surface 122. The one or more stationary alignment tabs 220 face the mounting surface 122 of the case 100 when the case 100 is received by the docking surface 210, as shown in FIGS. 1A and 1B, for example. The one or more stationary alignment tabs 220 are configured to facilitate alignment of and engagement between the charging port of the mobile electronic device 110 and a charge connector 300 during mounting of the case 100 (with the mobile electronic device 110) to the dock 200. For example, tabs 220 may define grooves, rails, or other structures that define a movement direction of the case 100 relative to the dock 200 during docking. Tabs 220 defining such a groove may thus define a sliding direction of the case toward charge connector 300. Through engagement with projections 126 of mounting surface 122, tabs 220 prevent non-sliding movement of the case 100 during docking. Accordingly, alignment of and engagement between the charging port of the mobile electronic device 110 and charge connector 300 during mounting of the case 100 (with the mobile electronic device 110) to the dock 200 is promoted by the position and orientation of tabs 110.

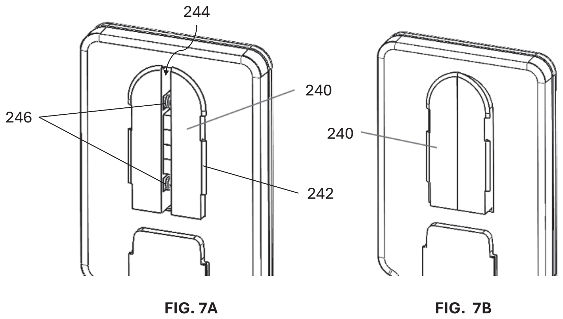

Such alignment is also facilitated by the docking surface 210 having a key 230 projecting from the docking surface 210. The key 230 has at least one pair of mating sections 240 movable relative to each other between an expanded position (e.g., as shown in the embodiment illustrated in FIG. 7A) and a compressed position (e.g., as shown in the embodiment illustrated in FIG. 7B) during mounting of the case 100 (with the mobile electronic device 110) to the dock 200. For example, sections 240 may be biased by springs or other biasing elements 246 to move laterally away from one another in a direction orthogonal to the mounting (sliding) direction of case 100 during docking. However, movement between the expanded and compressed positions of the least one pair of mating sections 240 is not limited to a lateral direction (e.g. horizontal) as illustrated in FIGS. 7A-7B. Rather, movement between the expanded and compressed positions of the least one pair of mating sections 240 may be modified to move along an opposite, longitudinal direction (e.g. vertical), for example, such that the case 100 and/or the mobile electronic device 110 may be mounted to the dock 200 from the side (a different direction from that shown by the arrows 400a, 400b, 500 in FIGS. 1A-1B, for example). Additionally, the at least one pair of mating sections 240 may comprise a single unitary part, or it may be an assembly of structural elements comprising multiple individual unitary parts. Further, the size and shape of the at least one pair of mating sections 240 as illustrated in the figures are not intended to be limiting. Rather, the size and shape of the at least one pair of mating sections 240 may generally correspond to the size and shape of a portion of the case 100 and/or the mobile electronic device 110 to be received. Other alternatives and variations will be apparent to persons of ordinary skill in the art in view of the present disclosure.

In an exemplary embodiment, the one or more alignment tabs 220 and the key 230 are oriented and aligned to define a common sliding direction, and further, may define one or more common, aligned grooves. In this embodiment, when the case 100 (having the electronic mobile device 110) is mounted to the dock 200, the mounting surface 122 of the case 110 engages with the key 230 and the one or more alignment tabs 220 consecutively and/or simultaneously, such that only sliding movement of the case 110 relative to the dock 200 is permitted. Defining such sliding movement may promote consistent and simple engagement of the charging port of mobile electronic device 110 with charge connector 300, particularly in cases where mobile electronic device 110 includes a recessed charging port. Additionally or optionally, when the case 100 (having the electronic mobile device 110) is mounted to the dock 200, the mounting surface 122 of the case 110 engages with the key 230 and the one or more alignment tabs 220 consecutively and/or simultaneously, such that parallel movement of the case 110 relative to the charging connector 300 and/or the dock 200 is permitted, thereby preventing wear or damage to the charging connector 300 over time or multiple uses.

In one non-limiting example, as best shown in FIGS. 5A-5B, the mounting surface 122 includes one or more projections 126 defining corresponding one or more grooves 124 configured to mate with corresponding protrusions 242 of the mating sections 240 to align the case 100 with the dock 200 during mounting. Through engagement of grooves 124/projections 126 with protrusion 242 and tabs 220, only sliding movement of the case 110 relative to the dock 200 is permitted during docking. Additionally, engagement of projections 126 with the corresponding one or more stationary alignment tabs 220 aligns the charging connector 300 with the charging port of the mobile electronic device 110 during mounting to secure the case 110 to the dock 200 during charging of the mobile electronic device 110. In this way, when the mounting surface 122 of the case 110 engages with at least the one or more stationary alignment tabs 220, only sliding movement of the case 110 relative to the dock 200 is permitted.

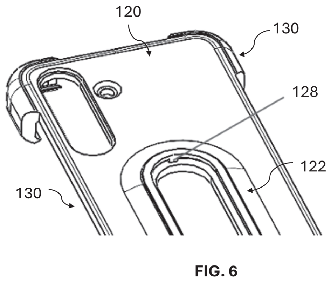

Additionally or optionally, the mounting surface 122 includes at least one stop surface 128 (e.g., as best shown in the embodiment illustrated in FIG. 6). The at least one stop surface 128 is positioned to prevent movement of the at least one pair of mating sections 240 toward the compressed position (e.g., as shown in the embodiment illustrated in FIG. 7B) when case 100 is fully docked to dock 200, i.e., when charge connector 300 is connected to the charging port of the mobile electronic device 110 and the one or more projections 126 are mated to the one or more stationary alignment tabs 220. Preventing compressing of mating portions 240 may advantageously prevent preventing movement of the case 100 outward away from the docking surface 210 during charging of the mobile electronic device 110. In a non-limiting example, the stop surface 128 extends for a length between the at least one pair of mating sections 240, such as in the space 244 between the at least one pair of mating sections 240 when the at least one pair of mating sections 240 are in the expanded position (e.g., as shown in the embodiment illustrated in FIG. 7A). One skilled in the art would understand from the description herein that the at least one stop surface 128 can be formed by any blocking surface formed on the mounting surface 122 of the case 100 that is adapted to block the movement of the at least one pair of mating sections 240 toward the compressed position from the extended position.

The at least one stop surface 128 may be configured to contact at least a portion of the at least one pair of mating sections 240. In some examples, stop surface 128 may be configured to engage with corresponding structures on mating sections 240, to resist undocking of case 100 from dock 200. Although FIG. 6 shows the at least one stop surface 128 and the mounting surface 122 as a single unitary part, a person of ordinary skill in the art would understand that the at least one stop surface 128 may be an individual part that is separate from the mounting surface 122. Other alternatives and variations will be apparent to persons of ordinary skill in the art in view of the present disclosure.

In an exemplary embodiment, when the stop surface 128 is engaged with corresponding structures on mating sections 240 to prevent or resist movement of the at least one pair of mating sections 240 toward the compressed position from the extended position, the grooves 124/projections 126 are simultaneously engaged with the one or more alignment tabs 220, thereby ensuring a full or complete alignment of the charging connector 300 with the charging port of the mobile electronic device 110 during mounting. Additionally or optionally, when the stop surface 128 is disengaged with corresponding structures on mating sections 240, the grooves 124/projections 126 are simultaneously disengaged with the one or more alignment tabs 220, resulting in disconnection of (the charging port of) the mobile electronic device 110 from the charging connector 300. In one non-limiting example, disengagement of the stop surface 128 from the mating sections 240 and the grooves 124/projections 126 from the tabs 220 via sliding the case 100 upwardly (e.g. in an opposite direction of and along arrow 500 in FIG. 1B) results in disconnection of the mobile electronic device 110 from the charging connector 300 and, subsequently, allows for moving or pulling the case 100 away from the docking surface 210 (e.g. in an opposite direction of and along arrow 400a in FIG. 1A). In this way, sliding the case 100 upwardly for a distance corresponding to an entire length of the docking surface 210 before moving the case 100 away from the docking surface 210 is optional.

An exemplary operation will not be described with reference to FIGS. 1A, 5A-5B, and 7A-7B. When the case 100 (having the mobile electronic device 110) is mounted to the dock 200, a force can be applied to the key 230 in a direction toward docking surface 210 (e.g., in a direction along arrow 400a in FIG. 1A) when the mounting surface 122 of the case 100 faces the docking surface 210 of the dock 210, such that the one or more projections 126 of the mounting surface 122 press against the corresponding protrusions 242 of the mating sections 240. Due to this contact, the at least one pair of mating sections 240 are moved from the expanded position (FIG. 7A) to the compressed position (FIG. 7B) in response to application of the force to protrusions 242 by projections 126. Once mating sections 240 reach the compressed position, projections 126 can slide past protrusions 242, allowing the one or more grooves 124 of the mounting surface 122 to mate with and receive the corresponding protrusions 242 of the mating sections 240. Protrusions 242 can then slide back outward under bias from biasing elements 246 to return to the expanded position. With protrusions 242 received within grooves 124, the case 100 is configured to slide downwardly (e.g. along arrow 400b in FIG. 1A) for mounting while at least one pair of mating sections 240 are maintained in the expanded position (FIG. 7A) during mounting.

In another non-limiting example, after the one or more grooves 124 of the mounting surface 122 mate with the corresponding protrusions 242 of the mating sections 240, such that mounting surface 122 of the case 100 effectively engages with the key 230, the case 100 is configured to slide downwardly (e.g. along arrow 400b in FIG. 1A) to engage one or more projections 126 of the mounting surface 122 with the corresponding one or more stationary alignment tabs 220. Engagement of projections 126 with tabs 220 blocks outward movement of case 100 away from docking surface 210. Additionally or optionally, once case 100 is fully docked, the at least one stop surface 128 is positioned to prevent movement of the at least one pair of mating sections 240 toward the compressed position (FIG. 7B) when the one or more projections 126 of the mounting surface 122 are mated to the one or more stationary alignment tabs 220, thereby further preventing outward movement of the case 100 away from docking surface 210 during charging of the mobile electronic device 110.

In another exemplary embodiment, with reference to FIGS. 1B, 5A-5B, and 7A-7B, when the case 100 (having the mobile electronic device 100) is mounted to the dock 200, the case 100 is configured to slide downwardly (e.g. along arrow 500 in FIG. 1B) when the mounting surface 122 of the case 100 faces the docking surface 210 of the dock 200 until the one or more projections 126 of the mounting surface 122 mate with the corresponding one or more stationary alignment tabs 220. In this way, mating sections 240 need not be compressed from the extended position, and can ride in grooves 124 until the one or more projections 126 of the mounting surface 122 engage with the corresponding one or more stationary alignment tabs 220 of the docking surface 210.

As noted above, the key 230 includes one or more biasing elements 246. The movement of the at least one pair of mating sections 240, such as movement from the compressed position to the expanded position, is facilitated, at least in part, by the one or more biasing elements 246. Specifically, an application of force or pressure to the key 230 moves the at least one pair of mating sections 240 against the biasing force of one or more biasing elements (e.g. springs, etc.) 246 toward the compressed position. In an exemplary embodiment, the one or more biasing elements 246 bias the at least one pair of mating sections 240 away from each other in the expanded position. Thus, when case **110** is pressed inwardly toward docking surface 210, one or more projections 126 press against corresponding protrusions 242, causing the at least one pair of mating sections 240 to move against the biasing force of the one or more biasing elements 246 and toward the compressed position. Additionally or optionally, after the one or more grooves 124 are mated to the corresponding protrusions 242 of the mating sections 240 during mounting of the case 100 to the dock 200, the at least one pair of mating sections 240 move toward the expanded position, thereby resisting outward disconnection of the case 100 from the dock 200 during charging of the mobile electronic device **110.** Additionally or optionally, the at least one pair of mating sections 240 remain in the expanded position as the one or more grooves 124 are mated to the corresponding protrusions 242 of the mating sections 240 during mounting of the case 100 to the dock 200.

During undocking of case 100 from dock 200, case 100 can be slid upward to disconnect charge connector 300 from the charging port of the mobile electronic device **110.** After projections 126 disengage from tabs 220, case 100 can be removed either by sliding upward until protrusions 242 disengage from grooves 124, or by moving case 100 outward away from docking surface 210. During such outward movement, projections 126 can press against rearward portions of protrusions 242, causing movement of mating sections 240 toward the compressed position.

Engagement between the mounting surface 122 of the case 100, the key 230 of the dock 200, and the one or more alignment tabs 220 of the dock 220, mitigates or prevents possible damage to or disconnection (e.g. due to shock and vibration) from the charge connector 300. Additionally or optionally, the engagement between the mounting surface 122 of the case 100, the key 230 of the dock 200, and the one or more alignment tabs 220 of the dock 220 provides a tactile feedback to the user to confirm that the charging port of the mobile device 110 is aligned with the charge connector 300 of the system 1000. In this way, a visual confirmation of the alignment between the charging port of the mobile device 110 and the charge connector 300 of the system 1000 is optional due to the engagement between two or more of the mounting surface 122 of the case 100, the key 230 of the dock 200, and the one or more alignment tabs 220 of the dock 220.

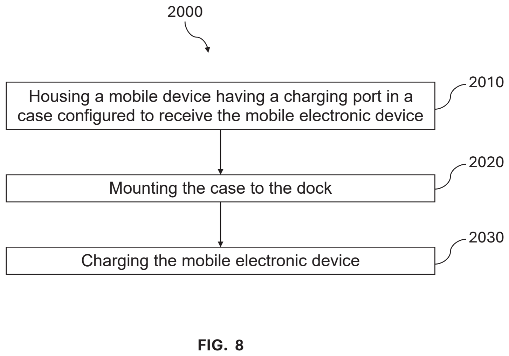

Turning now to FIG. 8, an exemplary method 2000 for charging a mobile electronic device via a wired connection with a charge connector, is provided. In an exemplary embodiment, method 2000 is described in the context of system 1000 as discussed above. Generally, method 2000 includes: step 2010 of housing a mobile device having a charging port in a case configured to receive the mobile electronic device; step 2020 of mounting the case to the dock; and step 2030 of charging the mobile electronic device.

Step 2010 includes housing a mobile device having a charging port in a case configured to receive the mobile electronic device. In an exemplary embodiment, the mobile device 110 having the charging port is housed in the case 100 configured to receive the mobile electronic device 110. The case 100 has a front surface configured to face the mobile electronic device 110, a rear surface 120 opposite the front surface, and one or more peripheral side surfaces 130 surrounding the front surface and/or the rear surface 120. Additionally or optionally, the rear surface includes a mounting surface 122.

Step 2020 includes mounting the case to the dock. In an exemplary embodiment, the dock 200 has a docking surface 210 configured to receive the case 100 having the mobile electronic device 110. The docking surface 210 includes one or more stationary alignment tabs 220 projecting from the docking surface 210. The one or more stationary alignment tabs 220 face the mounting surface 122 of the case 100 when the case 100 is received by the docking surface 210. In this way, the one or more stationary alignment tabs 220 are configured to facilitate alignment of and engagement between the charging port of the mobile electronic device 110 and a charging connector 300 during mounting of the case 100 to the dock 200. The docking surface may include a key 230 projecting from the docking surface 210. The key 230 has at least one pair of mating sections 240 movable relative to each other between an expanded position and a compressed position during mounting of the case 100 to the dock 200. In this configuration, the one or more alignment tabs 220 and the key 230 are structured such that when the mounting surface 122 of the case 100 engages with the key 230 and the one or more alignment tabs 220, only sliding movement of the case 110 relative to the dock 200 is permitted. Additionally or optionally, the key 230 includes one or more biasing elements, such as the one or more biasing elements 246 for biasing the at least one pair of mating sections 240 away from each other in the expanded position (FIG. 7A).

In an exemplary embodiment, step 2020 includes moving case 100 toward docking surface 210, thereby applying a force to the key 230 when the projections 126 of the mounting surface 122 contact protrusions 242 of the mating sections until the one or more grooves 124 of the mounting surface 122 mate with the corresponding protrusions 242 of the mating sections 240. In an exemplary embodiment, as best shown in the embodiment illustrated in FIGS. 5A-5B, protrusions 242 extend along a length of a portion of the docking surface 210 and includes beveled surfaces (e.g. a front bevel 242a and a rear bevel 242b) that have corresponding geometries to align and/or enable inward movement under contact with projections 126, and engage with the geometries of the one or more grooves 124 of the case 100. Additionally or optionally, the beveled surfaces permit at least the case 100 to be decoupled or disconnected from the dock 200, such that at least partially sliding the phone upwardly to decouple or disconnect the case 100 from the dock 200 (e.g. along a direction opposite of the arrow 500 in FIG. 1B) is optional.

In a non-limiting example, the at least one pair of mating sections 240 move from the expanded position to the compressed position in response to application of the force to the key 230 (e.g. by projections 126). Additionally or optionally, step 2020 includes sliding the case 100 downwardly (e.g. along arrow 400b in FIG. 1A) when the mounting surface 122 of the case 100 faces the docking surface 210 of the dock 200, until one or more projections 126 of the mounting surface 122 mate with the corresponding one or more stationary alignment tabs 220. In this way, step 2020 includes engaging one or more projections 126 of the mounting surface 122 with the corresponding one or more stationary alignment tabs 220, and the at least one pair of mating sections 240 move from the compressed position (FIG. 7B) to the expanded position (FIG. 7A) in response to engagement between the one or more projections 126 and the corresponding one or more stationary alignment tabs 220. Additionally or optionally, step 2020 includes sliding the case 110 downwardly when the mounting surface 122 of the case 100 faces the docking surface 210 of the dock 200, such that the one or more grooves 124 are mated to the corresponding protrusions 242 of the mating sections 240, but the at least one pair of mating sections 240 are maintained in the expanded position during mounting of the case 100 to the dock 200.

In another exemplary embodiment, step 2020 includes sliding the case 110 further downwardly after the mounting surface 122 of the case 100 engages with the key 230 to align one or more projections 126 of the mounting surface 122 with the corresponding one or more stationary alignment tabs 220. Further, the mounting surface 122 includes at least one stop surface 128 positioned to prevent movement of the at least one pair of mating sections 240 toward the compressed position when the one or more projections 126 of the mounting surface 122 are mated to the one or more stationary alignment tabs 220, thereby preventing disconnection of the case 100 from the dock 200 during charging of the mobile electronic device 110 and/or preventing damage to the charging connector 300 or disconnection of the mobile electronic device 110 from the charging connector 300.

Step 2030 includes charging the mobile electronic device. In an exemplary embodiment, the mobile device 110 is charged via a wired connection with a charge connector 300. Additionally or optionally, the charge connector 300 extends through an aperture 254 defined by a base 250 of the dock, and after the charge connector 300 is secured to the base 250 of the dock 200, the case 100 is mounted to the dock 200.

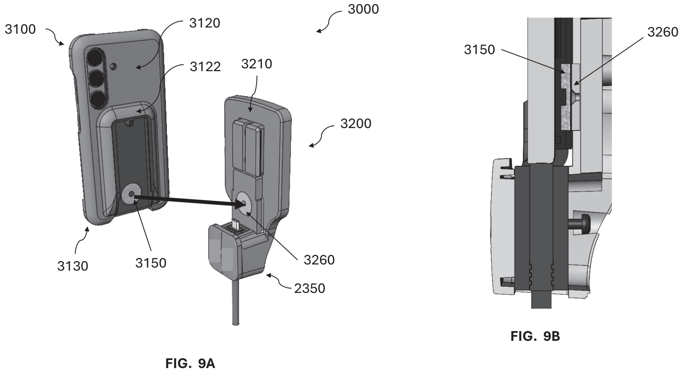

With reference to the drawings, FIGS. 9A-9D, 10, and 11 illustrate another embodiment of system 1000, in particular system 3000 for mounting a mobile electronic device having a charging port. In an exemplary embodiment, system 3000 includes a case 3100 configured to receive the mobile electronic device 3110. In general, the system 3000 may be provided anywhere that it is desired to dock and/or charge mobile electronic device 3110. Still further, the features of system 3000 may be generally similar to or the same as those described above with respect to system 1000, except with respect to the differences discussed below.

In an exemplary embodiment, case 3100 has a front surface configured to face the mobile electronic device 3110, a rear surface 3120 opposite the front surface, and one or more peripheral side surfaces 3130 surrounding the front surface. Still further, at least one of the one or more peripheral side surfaces 3130 of case 3100 include an opening 3132 to enable access by at least a charge connector 3300 to the charging port of the mobile electronic device 3110 when the mobile electronic device 3110 is received by the case 3100.

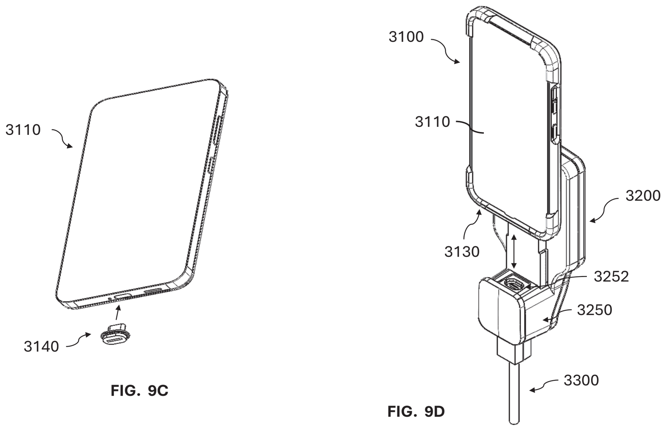

In some examples, system 3000 includes a magnetic insert 3140 capable of attachment to the charging port of the mobile electronic device 3110. In some examples, the magnetic insert 3140 is integrally formed with the one or more peripheral side surfaces 3130 of case 3100 as a single unitary part. However, as shown in FIG. 9C, the magnetic insert 3140 may be separate from the mobile electronic device 3110 or the case 3100, such that the magnetic insert 3140 is configured to be releasably attached to the charging port of the mobile electronic device 3110. In preferred examples, magnetic insert 3140 may include a flange or lip that mates with case 3100, such that case 3100 operates to retain magnetic insert 3140 in place attached to the charging port of mobile electronic device 3110, and thereby block accidental or intentional removal of magnetic insert 3140 when mobile electronic device 3110 is received in case 3100.

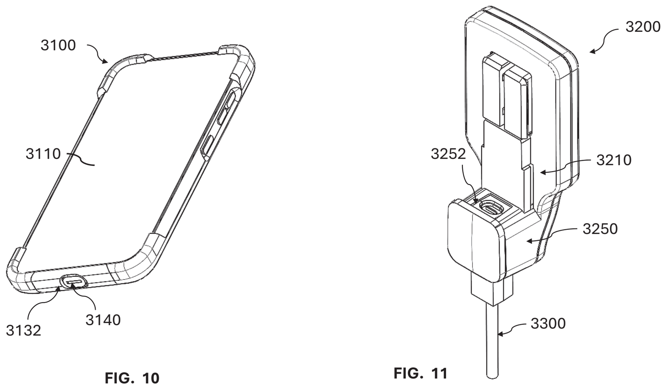

As shown in FIG. 10, the magnetic insert 3140 may be structured such that an outer surface thereof is flush with the surface of case 3100, so that case 3100 and magnetic insert 3140 form a uniform outer surface. Notwithstanding the above, the magnetic insert 3140 may have any suitable size, shape, and/or material. In non-limiting examples, the magnetic insert 3140 may include magnetic material made from rare earth materials, such as Neodymium-Iron-Boron (NdFeB), Samarium-cobalt, as are generally available. The magnetic insert 3140 may also include magnetic material made from iron, nickel or other suitable alloys. Alternatively or additionally, the magnetic insert 3140 may include one or more materials or members susceptible to movement by magnetic fields, e.g. metallic or ferromagnetic members.

Turning now to FIGS. 9A-9B and 11, in an exemplary embodiment, system 3000 includes a dock 3200 having a docking surface 3210 configured to receive the case 3100. The dock 3200 includes a base 3250 fixedly coupled to the docking surface 3210. The base 3250 may have a first magnetic surface 3252 (as best shown in FIG. 9D, for example) facing the one or more peripheral sides surfaces 3130 including the opening 3132. The base 3250, including the first magnetic surface 3252, may have any suitable size and shape that generally corresponds to the size and shape of the case 3100 to be received by the dock 3200 and/or the mobile electronic device 3110 to be received by the case 3100. The first magnetic surface 3252 defines an aperture 3254 through which the charge connector 3300 extends. In this way, the mobile electronic device 3110 is advantageously charged via a wired connection with the charge connector 3300, when the mobile electronic device 3110 is received by the case 3100 and when the case 3100 (with the mobile electronic device 3110) is mounted to the dock 3200. This is achieved, in part, by a magnetic attraction between the first magnetic surface 3252 of the base 3250 (e.g. as best shown in FIGS. 9C-9D) and the magnetic insert 3140. In this way, alignment of and engagement between the charging port of the mobile electronic device 3110 and a charge connector 3300 during mounting of the case 3100 (with the mobile electronic device 3110) to the dock 3200 is promoted. Additionally or optionally, due to at least the engagement between the first magnetic surface 3252 and the magnetic 3140, the mobile electronic device 110 is prevented or restricted from being disconnected from the charge connector 3300 (and thus avoids disruptions to charging the mobile electronic device 3110 via the wired connection with the charge connector 3300, such as disruptions caused by/in a moving vehicle).

Additionally or optionally, as best shown in FIGS. 9A, the rear surface 3120 of the case 3110 may include a mounting surface 3122 having a metal layer 3150. Metal layer 3150 may be mounted so as to be visible in mounting surface 3122, or may be recessed or covered within mounting surface 3122. The metal layer 3150 may have any size, shape, or depth that is configured to substantially contact, face, and/or receive a magnetic field generated by the one or more magnets 3260 of the docking surface 3210. In this way, one or more magnets 3260 of the docking surface 3210 are positioned to engage the metal layer 3150 of the case 3110, thereby resisting disconnection of the case 3110 from the dock 3200 during charging.

In particular, the one or more magnets 3260 are configured to align with the metal layer 3150 when the charging port of the mobile electronic device 3110 is engaged with the charging connector during mounting to resist sliding movement of the case 3100 relative to the dock 3200. As shown in FIG. 9A, one or more magnets 3260 may be positioned between a pair of opposed alignment tabs to facilitate alignment of case 3100 and dock 3200 during mounting. One or more magnets 3260 may be mounted so as to be visible in docking surface 3210, or may be recessed or covered within docking surface 3210.

While the above examples are described with magnetic elements on one the case 3100 and dock 3200, and metal or ferromagnetic elements on the other one of case 3100 and dock 3200, it will be understood that the relative positions of these elements may be reversed without departing from the scope of the invention. Further, the above examples may include magnetic elements on both case and dock which are oriented to attract one another, and thereby obviate the need for metal or ferromagnetic elements. In other words, case 3100 and dock 3200 may each include respective one or more magnets 3260 configured to align and engage with each other, thereby further resisting disconnection of the case 3110 from the dock 3200 during charging. Any example in which a magnetic attractive force is generated between the recited magnetic and/or metal/ferromagnetic elements is contemplated as being within the scope of the disclosed invention.

As shown in FIG. 8, an exemplary method 2000 for charging a mobile electronic device via a wired connection with a charge connector, is provided. In an exemplary embodiment, method 2000 is described in the context of system 3000 as discussed above. Generally, method 2000 includes: step 2010 of housing a mobile device having a charging port in a case configured to receive the mobile electronic device; step 2020 of mounting the case to the dock; and step 2030 of charging the mobile electronic device.

Step 2010 includes housing a mobile device having a charging port in a case configured to receive the mobile electronic device. In an exemplary embodiment, the mobile device 3110 having the charging port is housed in the case 3100 configured to receive the mobile electronic device 3110. The case 3100 has a front surface configured to face the mobile electronic device 3110, a rear surface 3120 opposite the front surface, and one or more peripheral side surfaces 3130 surrounding the front surface and/or the rear surface 1320. Additionally or optionally, the rear surface includes a mounting surface 3122 having a metal layer 3150.

Step 2020 includes mounting the case to the dock. In an exemplary embodiment, the dock 3200 has a docking surface 3210 configured to receive the case 3100 having the mobile electronic device 3110. The docking surface 3210 has one or more magnets 3260 configured to facilitate alignment of and engagement between the charging port of the mobile electronic device 3110 and a charge connector during mounting. Still further, a base 3250 is fixedly coupled to the docking surface 3210. The base 3250 includes a first magnetic surface 3252 facing the one or more peripheral side surfaces 3130 including the opening 3132. The first magnetic surface 3252 defines an aperture 3254 through which the charge connector extends.

In an exemplary embodiment, a magnetic insert 3140 is positioned adjacent to the dock 3200, such that the magnetic insert 3140 is drawn by an attractive force for engagement with the first magnetic surface 3252 of the dock 3200 to align the case 3100 with the dock 3200 during the step 2020 of mounting or to secure the case 3100 to the dock 3200 during the step 2030 of charging. Additionally or optionally, the metal layer 3150 of the case 3100 is positioned adjacent to the one or more magnets 3260 of the docking surface 3200, such that the metal layer 3150 is drawn by an attractive force for engagement with the one or more magnets 3260 of the docking surface 3210, thereby preventing disconnection of the case 3100 from the dock 3200 during charging. In this way, the mounting includes aligning the one or more magnets with the metal layer to resist the sliding movement of the case relative to the dock.

Step 2030 includes charging the mobile electronic device. In an exemplary embodiment, the mobile device 3110 is charged via a wired connection with a charge connector 300. Additionally or optionally, the charge connector 3300 extends through an aperture 3254 defined by the base 3250 of the dock 3200, and after the charge connector 3300 is secured to the base 3250 of the dock 3200, the case 3100 is mounted to the dock 3200.

Still further, method 2000 may include unmounting the mobile electronic device by applying a force to one or more of the case 3100 and the dock 3200, such as a force sufficient to overcome the magnetic attraction between the metal layer 3150 and the one or more magnets 3260, between the magnetic insert 3140 and the first magnetic surface 3252, or a combination thereof, in order to urge or permit movement of the case 3100 relative to the dock 3200 (e.g., to remove the case 3100 from engagement with the dock 3200).

Although the invention is illustrated and described herein with reference to specific embodiments, the invention is not intended to be limited to the details shown. Rather, various modifications may be made in the details within the scope and range of equivalents of the claims and without departing from the invention.

## Claims

1. A system for mounting a mobile electronic device having a charging port, the system comprising:
a case configured to receive the mobile electronic device, the case having a front surface configured to face the mobile electronic device, a rear surface opposite the front surface, and one or more peripheral side surfaces surrounding the front surface, the rear surface including a mounting surface comprising a metal layer;
a dock having a docking surface configured to receive the case, the docking surface comprising:
one or more magnets generating a magnetic field in a direction of the mounting surface of the case when the case is received by the docking surface; and
one or more stationary alignment tabs projecting from the docking surface and facing the mounting surface of the case when the case is received by the docking surface, the one or more stationary alignment tabs configured to facilitate alignment of and engagement between the charging port of the mobile electronic device and a charging connector during mounting,
wherein the one or more alignment tabs are structured such that, when the mounting surface of the case engages with the one or more alignment tabs, only sliding movement of the case relative to the dock is permitted, and
wherein the one or more magnets are configured to align with the metal layer when the charging port of the mobile electronic device is engaged with the charging connector during mounting to resist the sliding movement of the case relative to the dock.

2. The system of claim 1, wherein at least one of the one or more peripheral side surfaces includes an opening to enable connection between the charge connector to the charging port of the mobile electronic device.

3. The system of claim 1, further comprising a magnetic insert capable of attachment to the charging port of the mobile electronic device.

4. The system of claim 3, wherein the magnetic insert is includes an outer surface that is configured to be flush with the one or more peripheral side surfaces of case when the magnetic insert is attached to the charging port of the mobile electronic device.

5. The system of claim 3, wherein the dock includes a base fixedly coupled the docking surface, the base comprising a first magnetic surface facing the one or more peripheral side surfaces including the opening, the first magnetic surface defining aperture through which the charge connector extends.

6. The system of claim 5, wherein the first magnetic surface of the dock is configured to engage the magnetic insert of the case to align the case with the dock during mounting or to secure the case to the dock during charging.

7. The system of claim 1, wherein the one or more stationary alignment tabs comprise a pair of opposed alignment tabs, and the one or more magnets are positioned between the pair of opposed alignment tabs.

8. A method for charging a mobile electronic device via a wired connection a charge connector, the method comprising:
housing a mobile device having a charging port in a case configured to receive the mobile electronic device, the case having a front surface configured to face mobile electronic device, a rear surface opposite the front surface, and one or more peripheral side surfaces surrounding the front surface, the rear surface including a mounting surface comprising a metal layer;
mounting the case to the dock, the dock having a docking surface configured to receive the case, the docking surface comprising one or more magnets generating a magnetic field in a direction of the mounting surface of the case when the is received by the docking surface, and one or more stationary alignment tabs projecting from the docking surface and facing the mounting surface of the case when the case is received by the docking surface, the tabs configured to facilitate alignment of and engagement between the charging port of the mobile electronic device and a charging connector during mounting, the mounting comprising aligning the one or more magnets with the metal layer to resist the sliding movement of the case relative to the dock; and
charging the mobile electronic device.

9. The method of claim 8, wherein the mounting comprises magnetically connecting a magnetic insert of the mobile device with a first magnetic surface of the dock.

10. The method of claim 9, further comprising attaching the magnetic insert to the charging port of the mobile device.

11. The method of claim 9, wherein the one or more stationary alignment tabs comprise a pair of opposed alignment tabs, and wherein the mounting comprises aligning the metal layer with the one or more magnets positioned between the pair of opposed alignment tabs.

12. The method of claim 9, unmounting the case from the dock by applying a force to one or more of the case and the dock to overcome the resistance generating by aligning the one or more magnets with the metal layer.
